# EUROPEAN PATENT SPECIFICATION

(11) **EP 2 526 844 B1**
(45) Date of publication and mention of the grant of the patent: **23.12.2015**
(21) Application number: 10720332.5
(22) Date of filing: 07.04.2010
(51) Int. Cl.: A47J 27/00, A47J 43/046, A47J 31/00

(54) **MILK FOAMING KETTLE**
MILCHSCHÄUMUNGSKESSEL
BOUILLOIRE DE MOUSSAGE DE LAIT

(30) Priority: 21.01.2010 CN 201020050265 U
(43) Date of publication of application: 28.11.2012
(73) Proprietor: Yuyao Sunboy Electric Appliance Co., Ltd, Yuyao, Zhejiang 315400 (CN)
(72) Inventor: YU, Chunping, Yuyao Zhejiang 315400 (CN)
(74) Representative: Kramer Barske Schmidtchen Patentanwälte PartG mbB
(86) International application number: PCT/CN2010/071601
(87) International publication number: WO 2011/088639

(56) References cited:
- EP-A1- 1 656 866
- WO-A1-2009/059439
- WO-A1-2009/135758
- WO-A1-2009/135759
- CN-Y- 201 033 032
- CN-Y- 201 061 480
- CN-Y- 201 200 323
- CN-Y- 201 356 471
- FR-A1- 2 784 522
- GB-A- 1 340 853
- JP-A- 6 269 367

## Description

### Field of the Invention

The present invention relates to kitchenware of electrical appliance, especially to a milk frother.

### Description of the Prior Art

There are all kinds of milk frother in the market, including some with stirring means in their lids and requiring a long stirring arm to extend into a container, causing difficult cleaning and steam penetrating in their motor to affect service life and safety. Some stirring means, as its output axle of motor directly penetrate the milk-holding container, has high requirement on the seal between axle sleeve and heating device in order to not only avoid the lubricant of motor entering the container but also avoid the milk in the container penetrating in container bottom to affect the operating circuit inside it, otherwise severe safety misadventure may be incurred.

WO 2009/135759 A1 discloses a frothing machine for creating froth from a drink containing milk, said frothing machine comprising a container for receiving the drink, a stirrer to rotate inside the container, an element on which the stirrer is mounted, driving means arranged in such a way as to magnetically rotatably drive the stirrer, and means for holding the stirrer inside the container, wherein said holding means comprise at least one holding magnet fixed in relation to the container in the operating position and are arranged in such a way as to ensure that the element is held magnetically inside the container.

### Summary of the Invention

Accordingly, the present invention has been keeping in mind the above problems occurring in the related art, such as the output axle of motor directly penetrating the container and extending into the milk frother, high requirement on the seal between axle sleeve and heating device, avoiding the lubricant of motor entering the container or avoiding the milk in the container penetrating in container bottom to affect the operating circuit inside it. The present invention provides a milk frother that utilizes magnets to separate the milk in upper cavity and the operating circuit in container bottom, featuring simple structure, convenient disassembly and cleaning, higher safety performance and longer service life.

The present invention as defined in the claims can solve the above-mentioned technical difficulties by the following scheme:
A milk frother comprises a container and an electrical base unit. The container is provided with a separating disc that divides the container into an upper cavity and a lower cavity. A stirrer with slave magnetic element is provided atop the separating disc. A heating device, a rotatable device and a motor are provided beneath the separating disc. The rotatable device is positioned right beneath the stirrer and is driven by the motor. The stirrer is provided with driving magnets that produce magnetic pull to and centrifugal force from slave magnets during rotation so as to drive the stirrer to operate. When the motor begins operating, it first drives the rotatable device. As the rotatable device is provided with driving magnetic element and the stirrer is provided with slave magnetic element, the rotation of the rotatable device drives the stirrer to rotate by the effect of magnets so as to realize stirring effect. Such a design is characterized by convenient disassembly and cleaning, higher safety performance and longer service life.

The rotatable device is provided with M pairs of driving magnetic elements with vertical polarity. Each pair of driving magnetic elements is distributed symmetrically centered by the output axle of motor, and neighboring two driving magnetic elements have opposite polarity. The stirrer is provided with N pairs of slave magnetic elements with vertical polarity. The slave magnetic elements are set over the driving magnetic elements. M is even and M ≥ 2, while N satisfying 1 ≤ N ≤ M-1.

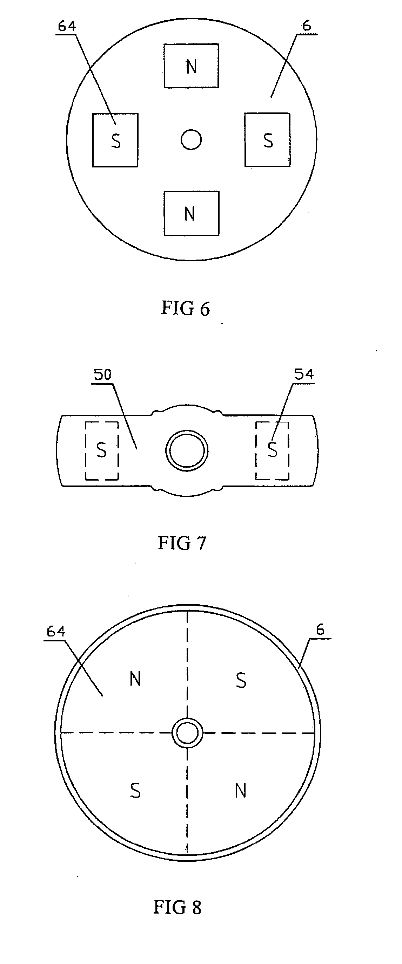

As a preferred embodiment, the number M of the pairs of driving magnetic element and the number N of the pairs of slave magnetic elements satisfy M = 2N. The distribution of driving magnetic elements in the rotatable device and slave magnetic elements in the stirrer can be summed up as follows: The rotatable device is provided with two or more even pairs of driving magnetic elements with vertical polarity. The driving magnetic elements are distributed symmetrically around the center of the rotatable device. The pair of driving magnetic elements has the same polarity while neighboring driving magnetic elements have opposite polarity. In the case of M = 2 and N = 1 as shown in FIG. 6 and FIG. 7, the magnetic pull between the slave magnetic elements and the driving magnetic elements in the rotatable device with opposite polarity drives the stirrer to operate. Meanwhile the repulsive force between the slave magnetic elements and the driving magnetic elements in the rotatable device with same polarity upheaves the stirrer. As the magnetic pull and the repulsive force of the stirrer are in a relatively balanced state during rotation, the stirrer is in a state of suspension, significantly reducing its friction force during rotation. Of course, in order to avoid too large magnetic pull between the driving magnetic elements and the slave magnetic elements to cause the motor's failure of running or too large friction force between the stirrer and the positioning axle to cause idle running of motor (increase production cost), it is inadvisable to set too more magnetic elements. It is preferable to set M:N=2:1 to reach a good balance between transmission and production cost.

It is preferable to set a bracket below the heating device and mount the motor on the bracket. The rotatable device is coupled to the output axle of motor by the way of bell and spigot joint, without contacting the heating device. The heating device is a heating disc. No contacting between the rotating device and the heating device avoids overheating the rotating device so that its service life can be prolonged.

It is preferable to set a positioning axle of stirrer in the center of separating disc. The stirrer comprises a magnetic element mounting rack that has slave magnetic elements inside it and a positioning hole in its center to match with the positioning axle of separating disc. The coupling between the positioning axle and the positioning hole enables the assembly and disassembly of the stirring device to become easy. The positioning axle is set vertically on the separating disc, right over the output axle of the motor. It is preferable to set a rotatable vane is provided on the magnetic element mounting rack. A fixing ring is coupled at both ends of the magnetic element mounting rack and a fixing ring is sheathed around the fixing ring. The rotatable vane on the magnet mounting rack tremendously enhances the stirring effect of the stirring device and facilitates disassembly for cleaning. The stirring springs enable the stirring of liquid in the container to be evener, improving the stirring effect.

It is preferable to adopt the positioning hole as blind hole. The stirrer is coupled to the positioning axle by the way of bell and spigot joint. Due to small contacting area, the friction force during rotation is also very small.

It is preferable to set a spout on the container to facilitate drainage.

It is preferable to set the driving magnetic element in a rectangular form and mounted vertically inside the rectangular groove of the magnetic element mounting rack. The slave magnetic element is also in a rectangular form and mounted vertically inside the rectangular groove of the rotatable device.

It is preferable to set the driving magnetic element in an annular form and mounted inside the annular groove of the magnetic element mounting rack. The slave magnetic element is in a sector form and mounted inside the sector groove of the rotatable device.

It is preferable to set a handle on the container. The handle has a switch to control the operation of heating device and motor and also an indicating lamp. The container is provided with a spout. The heating device is also provided in its lower part with a thermostat to monitor the temperature of heating device. The switch comprises an individual subswitch to control the operation of the heating device and a subswitch to control the operation of the motor. Thus, the switches can individually control the operation of the heating device or the motor, or simultaneously both of them. The switch is also provided with an indicating lamp to indicate the working states of the heating device and the motor. The heating device is also provided with a thermostat in its lower part to monitor the real-time temperature of the liquid in the container conveniently.

Upon adopting the aforesaid technical scheme, the present invention utilizes a separating disc to completely insulate the upper cavity that holds milk and the working circuit that operates the stirrer so that milk will not leak into the bottom of container to affect working circuit and the lubricant of motor will not leak into the upper cavity to contaminate milk. So this scheme should provide a sanitary and safe milk frother. The use of magnets provides a clean and environment-friendly way to drive stirrer. The stirrer is just positioned in the upper cavity so that the stirrer can be more conveniently disassembled for cleaning.

### BRIEF DESCRIPTION OF THE DRAWINGS

FIG. 1 is the schematic view of structure of the embodiment 1 in the present invention;
FIG. 2 is the vertical view of FIG. 1;
FIG. 3 is the sectional view showing the stirrer of FIG. 1;
FIG. 4 is the bottom view of FIG. 3.
FIG. 5 is the sectional view of heating device and separating disc.
FIG. 6 is a schematic view of polarity configuration of driving magnetic element in the rotatable device.
FIG. 7 is a schematic view of polarity configuration of slave magnetic element corresponding to FIG. 6 in the stirrer.
FIG. 8 is another schematic view of the structure of driving magnetic element in the rotatable device.
FIG. 9 is a schematic view of polarity configuration of slave magnetic element corresponding to FIG. 8 in the stirrer.
FIG. 10 is another schematic view of the structure of stirrer.

Of which: 1-container, 2-heating device, 3-separating disc, 4-motor, 5-stirrer, 6-rotatable device, 7-switch, 8-handle, 9-electrical base unit, 11-upper cavity, 12-lower cavity, 13-spout, 14-bracket, 21-thermostat, 31-positioning axle, 50-magnetic element mounting rack, 51-positioning hole, 52-fixing ring, 53-stirring spring, 54-slave magnetic element, 55-rotatable vane, 64-driving magnetic element, 101-upper connector, 102-lower connector.

### DETAILED DESCRIPTION OF THE PREFERRED EMBODIMENTS

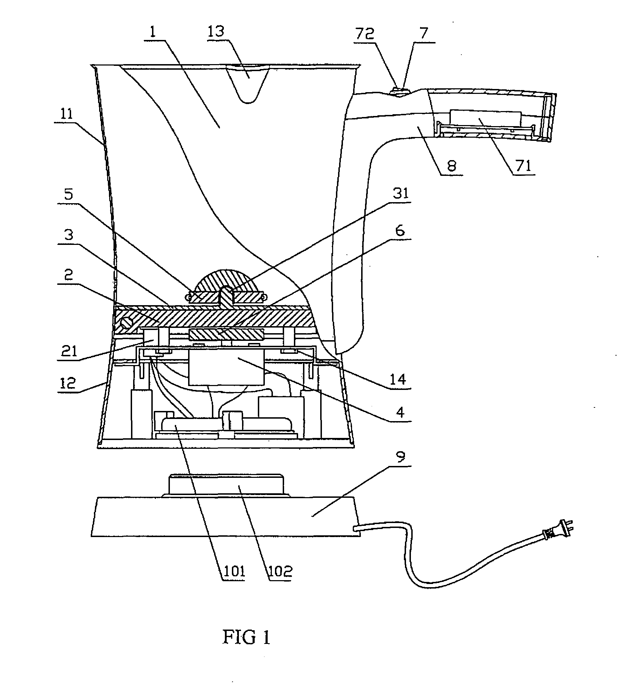

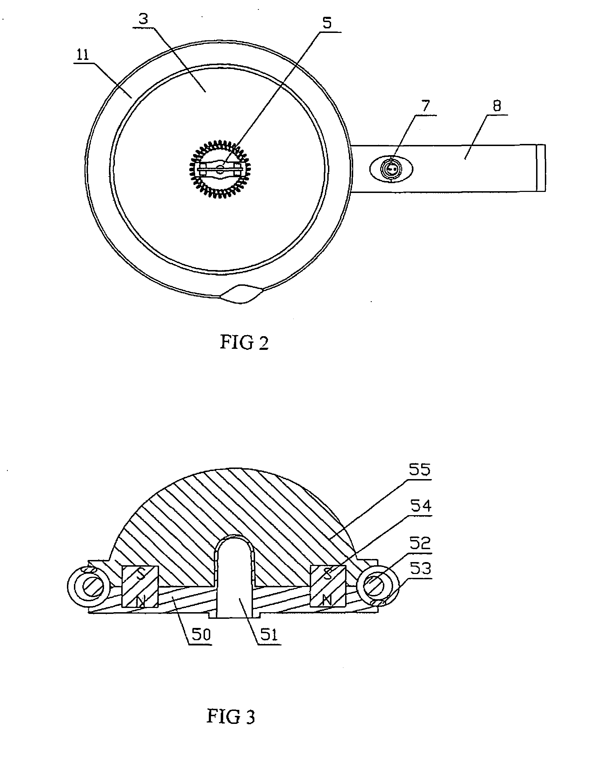

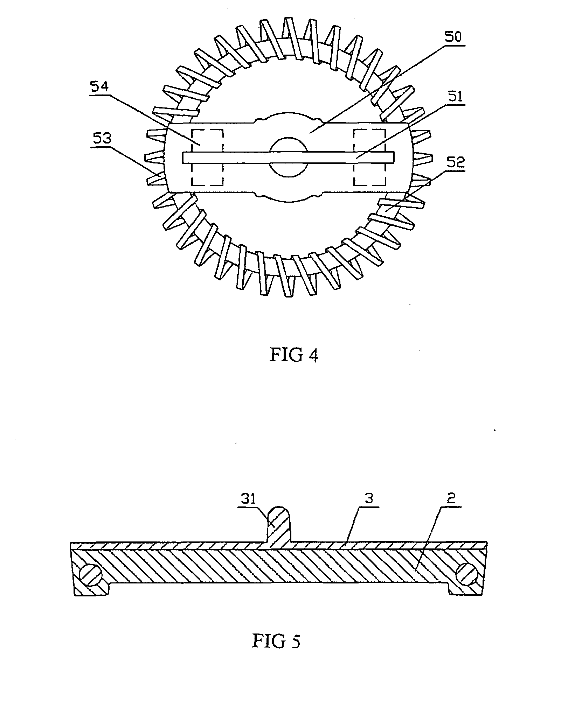

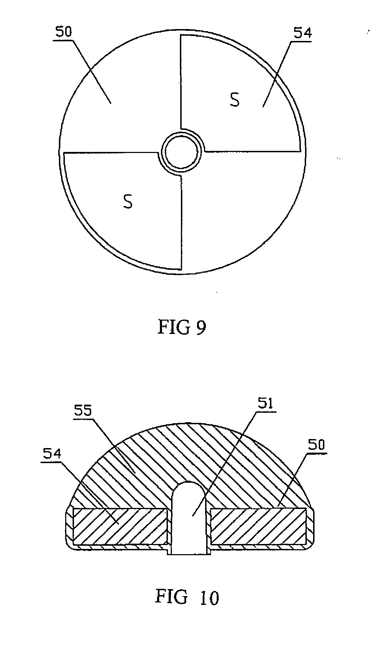

Reference will now be made in greater detail to exemplary embodiments of the invention with reference to the accompanying FIG 1 to FIG. 10.

### Embodiment 1

A milk frother as shown in FIG. 1 to FIG. 5 comprises a container 1 and an electrical base unit 9. The container 1 is provided with a separating disc 3 that divides the container 1 into an upper cavity 11 and a lower cavity 12. A stirrer 5 is provided on the separating disc 3 with slave magnetic elements 54. A heating device 2, a rotatable device 6 and a motor 4 are provided beneath the separating disc 3. The rotatable device 6 is driven by the motor 4. In the course of rotation, the rotatable device 6 that is provided with driving magnetic elements 64 drives the stirrer 5 to operate because the driving magnetic elements 64 play the roles of magnetic pull to and centrifugal force from the slave magnetic elements 54.

In the course of operation, the motor 4 first drives the rotatable device 6. In the course of rotation, as the rotatable device 6 is provided with driving magnetic elements 64 and the stirrer 5 is provided with slave magnetic elements 54, due to the effect of magnetic force, the rotatable device 6 drives the stirrer 5 so that the stirring is effected. Such a design has the advantages of convenient disassembly and cleaning, higher safety performance and longer service life. In the cases of M=2 and N=1 as shown in FIG. 6 and FIG. 7, the effect of attraction between the slave magnetic elements 54 and the driving magnetic elements 64 that sets an opposite polarity to the rotatable device 6 drives the stirrer 5 to rotate. Meanwhile the repulsive force between the slave magnetic elements 54 and the driving magnetic elements 64 with the same polarity as the rotatable device 6 upheaves the stirrer 5. As the attractive force and the repulsive force are in a rather balanced state in the course of rotation of the stirrer 5, the stirrer 5 is in the state of suspension so that the abrasion is significantly reduced during its rotation.

There are two pairs of driving magnetic elements 64 in the rotatable device 6 as shown in FIG. 6 and FIG. 7. The polarity of driving magnetic elements 64 is set vertical and each pair of driving magnetic elements 64 are in symmetrical distribution centered by the output shaft of motor 4. The neighboring two driving magnetic elements 64 have an opposite polarity. A pair of slave magnetic elements 54 with vertical polarity is provided in the stirrer 5 over the driving magnetic elements 64.

A bracket 14 is provided beneath the heating device 2 and the motor 4 is mounted on the bracket 14. The rotatable device 6 is coupled to the output shaft of the motor 4 by the way of bell and spigot joint without contacting the heating device 2. The heating device 2 is a heating disc. No contacting between the rotatable device 6 and the heating device 2 avoids overheating the rotatable device 6 so that its service life can be prolonged.

A positioning axle 31 is provided on the separating disc 3 to facilitate the positioning of the stirrer 5. The positioning axle 31 locates in the center of the separating disc 3. The stirrer 5 comprises a magnetic element mounting rack 50 in which the slave magnetic element 54 is mounted. A positioning hole 51 to match the positioning axle 31 of the separating disc 3 is provided in the center of the magnetic element mounting rack 50. The coupling between the positioning axle 31 and the positioning hole 51 enables the assembly and disassembly of the stirrer 5 to become easy. The positioning axle 31 is set vertically on the separating disc 3 and positioned right over the output axle of the motor 4.

A rotatable vane 55 is provided on the magnetic element mounting rack 50. A fixing ring 52 is coupled at both ends of the magnetic element mounting rack 50 and a fixing ring 53 is sheathed around the fixing ring 52.The rotatable vane 55 on the magnetic element mounting rack 50 tremendously enhances the stirring effect of the stirrer 5 and facilitates the disassembly for cleaning. The stirring springs 53 enable the stirring of liquid in container 1 to be evener, improving the stirring effect.

An upper connector 101 is provided in the lower part of container 1 and a lower connector 102 is provided in the electrical base unit 9 to match the upper connector 101.

An electrical base unit provided below the container is a 360° power connector that comprises an upper connector in the bottom of lower cavity 12 and the lower connector 102 in the electrical base unit 9 that matches with the upper connector 101. The upper cavity 11 and the separating disc 3 are made of stainless steel sheet with weak magnetic property.

The container 1 is provided with a handle 8 that has a switch 7. The switch 7 controls the operation of the heating device 2 and the motor 4, and also has an indicating lamp 72. The container 1 is provided with a spout 13. The heating device 2 is also provided with a thermostat 21 in its lower part to monitor the temperature the heating device 2. The switch 7 also comprises an individual subswitch to control the operation of the heating device 2 and a subswitch to control the operation of the motor 4. Thus, the switches can individually control the operation of the heating device or the motor or simultaneously both of them. The switches also have lamps to indicate the working states of the heating device and the motor. The heating device 2 is also provided with a thermostat 21 in its lower part to monitor the real-time temperature of the liquid in the container conveniently. The container 1 is provided with a spout 13 to facilitate drainage.

The positioning hole 51 is a blind hole. The stirrer 5 is coupled to the positioning axle 31 by the way of bell and spigot joint. Due to small contacting area, the friction force during rotation is also very small.

The driving magnetic element 64 is in a rectangular form and mounted vertically inside the rectangular groove of the magnetic element mounting rack 50. The slave magnetic element 54 is also in a rectangular form and mounted vertically inside the rectangular groove of the rotatable device 6. When the driving magnetic element 64 is put in the rectangular groove, the magnetic element mounting rack 50 is conveniently coupled with the rotatable vane 55.

Before the milk frother works, the mutual magnetic pull between the driving magnetic element 64 and a pair of slave magnetic elements in corresponding positions and with same polarity is greatly larger than the mutual repulsive force between the driving magnetic element 64 and a pair of slave magnetic elements 54 in neighboring positions and with opposite polarity. At this time the rotatable device 6 sucks the stirrer 5 firmly and both keep relatively stationary and balanced. When the milk frother works, the motor 4 begins operating. The motor 4 drives the rotatable device to run. The mutual magnetic pull between the driving magnetic element 64 and a pair of slave magnetic elements 54 in corresponding positions and with same polarity still exists and drives the stirrer 5. When the driving magnetic element 64 gradually accelerate its rate of rotation, it will gradually divoice from the slave magnetic elements 54. Meanwhile there is a trend of approach between the mutual repulsive force between the driving magnetic element 64 and a pair of slave magnetic elements 54 in neighboring positions and with opposite polarity, and the mutual repulsive force between them begins appearing. At this time, mutual repulsive force and mutual magnetic pull may be disintegrated into vertical force in vertical orientation and tangential force in rotating orientation in the instant of rotation of rotatable device. The orientations of tangential force of both mutual repulsive force and mutual magnetic pull are identical to the orientation of the motor's rotation and are overlaid and enlarged so as to rotate the stirrer 5. Though the orientations of the vertical forces effected by mutual repulsive force and mutual magnetic pull are opposite, yet the vertical forces of mutual repulsive force is less than that of mutual magnetic pull, plus its self weight, so that the stirrer 5 is still sucked firmly to the positioning axle 31 by the rotatable device 6 during rotation. Moreover, the friction force between the stirrer 5 and the positioning axle 31 enables the rotatable device 6 and the stirrer 5 to keep balanced in rotation so as to implement the stirring of milk.

As shown in FIG. 8 to FIG. 10, when other features are the same in the above-mentioned embodiments, the driving magnetic element 64 can be of annular shape and mounted inside the annular groove of magnetic element mounting rack 50; its corresponding slave magnetic element can be of sector shape and mounted inside the sector groove of the rotatable device 6.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A milk frother, comprising:
a container (1) and an electrical base unit (9);
the container (1) is provided with a separating disc (3) that divides the container (1) into an upper cavity (11) and a lower cavity (12).;
a stirrer (5) is provided on the separating disc (3) with slave magnetic elements (54);
a heating device (2), a rotatable device (6) and a motor (4) are provided beneath the separating disc (3);
the rotatable device (6) is driven by the motor (4);
in the course of rotation, the rotatable device (6) that is provided with driving magnetic elements (64) drives the stirrer (5) to operate because the driving magnetic elements (64) play the roles of magnetic pull to and centrifugal force from the slave magnetic elements (54),
**characterized in that**
there are M pairs of driving magnetic elements (64) in the rotatable device (6);
the polarity of driving magnetic elements (64) is set vertical and each pair of driving magnetic elements (64) are in symmetrical distribution centered by the output shaft of motor (4);
neighboring two driving magnetic elements (64) have an opposite polarity;
N pairs of slave magnetic elements (54) with vertical polarity are provided in the stirrer (5) over the driving magnetic elements (64); wherein
M is even and M ≥ 2, while N satisfying 1 ≤ N ≤ M - 1.

2. The milk frother of claim 1, wherein M = 2N.

3. The milk frother of claim 2, wherein M = 2 and N = 1.

4. The milk frother of claim 1, wherein
a bracket (14) is provided beneath the heating device (2) and the motor (4) is mounted on the bracket (14);
the rotatable device (6) is coupled to the output shaft of the motor (4) by the way of bell and spigot joint without contacting the heating device (2).

5. The milk frother of claim 1, wherein
a positioning axle (31) is provided on the separating disc (3) to facilitate the positioning of the stirrer (5). The positioning axle (31) locates in the center of the separating disc (3);
the stirrer (5) comprises a magnetic element mounting rack (50) in which the slave magnetic element (54) is mounted;
a positioning hole (51) to match the positioning axle (31) of the separating disc (3) is provided in the center of the magnetic element mounting rack (50).

6. The milk frother of claim 5, wherein
a rotatable vane (55) is provided on the magnetic element mounting rack (50);
a fixing ring (52) is coupled at both ends of the magnetic element mounting rack (50) and a fixing ring (53) is sheathed around the fixing ring (52).

7. The milk frother of claim 5, wherein
the positioning hole (51) is a blind hole.

8. The milk frother of claim 5, wherein
the driving magnetic element (64) is in a rectangular form and mounted vertically inside the rectangular groove of the magnetic element mounting rack (50);
the slave magnetic element (54) is also in a rectangular form and mounted vertically inside the rectangular groove of the rotatable device.

9. The milk frother of claim 5, wherein
the driving magnetic element (64) is in an annular form and mounted inside the annular groove of the magnetic element mounting rack (50);
the slave magnetic element (54) is in a sector form and mounted inside the sector groove of the rotatable device (6).

10. The milk frother of claim 5, wherein
the container (1) is provided with a handle (8) that has a switch (7);
the switch (7) controls the operation of the heating device (2) and the motor (4), and also has an indicating lamp (72);
the container (1) is provided with a spout (13);
the heating device (2) is also provided with a thermostat (21) in its lower part to monitor the temperature the heating device (2).

## Patentansprüche

1. Milchschäumer, umfassend:
einen Behälter (1) und eine elektrische Basiseinheit (9),
wobei der Behälter (1) mit einer Trennscheibe (3) ausgestattet ist, die den Behälter (1) in einen oberen Hohlraum (11) und einen unteren Hohlraum (12) aufteilt,
einen Rührer (5), der auf der Trennscheibe (3) mit magnetischen Folgeelementen (54) bereitgestellt ist,
eine Heizvorrichtung (2), eine drehbare Vorrichtung (6) und einen Motor (4), die unterhalb der Trennscheibe (3) bereitgestellt sind,
wobei die drehbare Vorrichtung (6) durch den Motor (4) angetrieben wird,
wobei im Verlauf der Drehung die drehbare Vorrichtung (6), die mit magnetischen Antriebselementen (64) ausgestattet ist, den Rührer (5) antreibt, so dass er betrieben wird, da die magnetischen Antriebselemente (64) eine magnetische Anziehung auf die magnetischen Folgeelemente (54) und eine Zentrifugalkraft von den magnetischen Folgeelementen (54) ausüben,
**dadurch gekennzeichnet, dass**
M Paare von magnetischen Antriebselementen (64) in der rotierenden Vorrichtung (6) vorliegen,
die Polarität der magnetischen Antriebselemente (64) vertikal eingestellt ist und jedes Paar von magnetischen Antriebselementen (64) in einer symmetrischen Verteilung zentriert durch die Abtriebswelle des Motors (4) vorliegt,
benachbarte zwei magnetische Antriebselemente (64) eine entgegengesetzte Polarität aufweisen,
N Paare von magnetischen Folgeelementen (54) mit einer vertikalen Polarität in dem Rührer (5) über den magnetischen Antriebselementen (64) bereitgestellt sind, wobei M geradzahlig ist und M ≥ 2, während N 1 ≤ N ≤ M - 1 genügt.

2. Milchschäumer nach Anspruch 1, wobei M = 2N.

3. Milchschäumer nach Anspruch 2, wobei M = 2 und N = 1.

4. Milchschäumer nach Anspruch 1, wobei
ein Halter (14) unterhalb der Heizvorrichtung (2) bereitgestellt ist und der Motor (4) auf dem Halter (14) montiert ist,
die drehbare Vorrichtung (6) mit der Abtriebswelle des Motors (4) mittels einer Muffenverbindung ohne Kontaktieren der Heizvorrichtung (2) gekoppelt ist.

5. Milchschäumer nach Anspruch 1, wobei
eine Positionierungsachse (31) auf der Trennscheibe (3) zum Erleichtern der Positionierung des Rührers (5) angeordnet ist, wobei die Positionierungsachse (31) im Zentrum der Trennscheibe (3) vorliegt,
der Rührer (5) einen Montageträger für das magnetische Element (50) umfasst, in dem das magnetische Folgeelement (54) montiert ist,
ein Positionierungsloch (51) zum Anpassen der Positionierungsachse (31) der Trennscheibe (3) in dem Zentrum des Montageträgers für das magnetische Element (50) bereitgestellt ist.

6. Milchschäumer nach Anspruch 5, wobei
ein drehbares Flügelrad (55) auf dem Montageträger für das magnetische Element (50) bereitgestellt ist,
ein Fixierring (52) an beide Enden des Montageträgers für das magnetische Element (50) gekoppelt ist und ein Fixierring (53) einhüllend um den Fixierring (52) angeordnet ist.

7. Milchschäumer nach Anspruch 5, wobei das Positionierungsloch (51) ein Sackloch ist.

8. Milchschäumer nach Anspruch 5, wobei
das magnetische Antriebselement (64) eine rechteckige Form aufweist und vertikal innerhalb der rechteckigen Rille des Montageträgers für das magnetische Element (50) montiert ist, das magnetische Folgeelement (54) ebenfalls eine rechteckige Form aufweist und vertikal innerhalb der rechteckigen Rille der drehbaren Vorrichtung montiert ist.

9. Milchschäumer nach Anspruch 5, wobei
das magnetische Antriebselement (64) eine Ringform aufweist und innerhalb der ringförmigen Rille des Montageträgers für das magnetische Element (50) montiert ist,
das magnetische Folgeelement (54) eine Sektorform aufweist und innerhalb der Sektorrille der drehbaren Vorrichtung (6) montiert ist.

10. Milchschäumer nach Anspruch 5, wobei
der Behälter (1) mit einem Griff (8) ausgestattet ist, der einen Schalter (7) aufweist,
der Schalter (7) den Betrieb der Heizvorrichtung (2) und des Motors (4) steuert und auch eine Anzeigelampe (72) aufweist,
der Behälter (1) mit einem Ausguss (13) ausgestattet ist,
die Heizvorrichtung (2) in deren unterem Teil zum Überwachen der Temperatur der Heizvorrichtung (2) auch mit einem Thermostaten (21) ausgestattet ist.

## Revendications

1. Dispositif de moussage pour le lait, comprenant :
un récipient (1) et une unité de base électrique (9) ;
le récipient (1) étant pourvu d'un disque séparateur (3) qui divise le récipient (1) en une cavité supérieure (11) et une cavité inférieure (12) ;
un agitateur (5) est aménagé sur le disque séparateur (3) avec des éléments magnétiques asservis (54) ;
un dispositif de chauffage (2), un dispositif rotatif (6) et un moteur (4) sont aménagés en dessous du disque séparateur (3) ;
le dispositif rotatif (6) est entraîné par le moteur (4) ;
au cours de la rotation, le dispositif rotatif (6) qui est pourvu d'éléments magnétiques d'entraînement (64) entraîne l'agitateur (5) en fonctionnement du fait que les éléments magnétiques d'entraînement (64) jouent les rôles d'attraction magnétique vers les éléments magnétiques asservis (54) et de force centrifuge vis-à-vis de ceux-ci,
**caractérisé en ce que** :
il y a M paires d'éléments magnétiques d'entraînement (64) dans le dispositif rotatif (6) ;
la polarité des éléments magnétiques d'entraînement (64) est réglée verticalement et chaque paire d'éléments magnétiques d'entraînement (64) a une distribution symétrique centrée par l'arbre de sortie du moteur (4) ;
deux éléments magnétiques d'entraînement (64) qui sont voisins ont une polarité opposée ;
N paires d'éléments magnétiques asservis (54) de polarité verticale sont aménagés dans l'agitateur (5) par-dessus les éléments magnétiques d'entraînement (64) ; dans lequel :
M est pair et M ≥ 2 tandis que N répond à la formule 1 ≤ N ≤ M-1.

2. Dispositif de moussage pour le lait selon la revendication 1, dans lequel M = 2N.

3. Dispositif de moussage pour le lait selon la revendication 2, dans lequel M = 2 et N = 1.

4. Dispositif de moussage pour le lait selon la revendication 1, dans lequel :
une potence (14) est aménagée en dessous du dispositif de chauffage (2) et le moteur (4) est monté sur la potence (14) ;
le dispositif rotatif (6) est couplé à l'arbre de sortie du moteur (4) au moyen d'un raccord à emboîtement sans venir en contact avec le dispositif de chauffage (2).

5. Dispositif de moussage pour le lait selon la revendication 1, dans lequel :
un axe de positionnement (31) est prévu sur le disque séparateur (3) afin de faciliter le positionnement de l'agitateur (5), l'axe de positionnement (31) étant situé au centre du disque séparateur (3) ;
l'agitateur (5) comprend une crémaillère de montage d'éléments magnétiques (50) dans laquelle l'élément magnétique asservi (54) est monté ;
un trou de positionnement (51) pour s'ajuster sur l'axe de positionnement (31) du disque séparateur (3) est prévu au centre de la crémaillère de montage d'éléments magnétiques (50).

6. Dispositif de moussage pour le lait selon la revendication 5, dans lequel :
une palette rotative (55) est aménagée sur la crémaillère de montage d'éléments magnétiques (50) ;
un anneau de fixation (52) est couplé aux deux extrémités de la crémaillère de montage d'éléments magnétiques (50) et un anneau de fixation (53) est gainé autour de l'anneau de fixation (52).

7. Dispositif de moussage pour le lait selon la revendication 5, dans lequel :
le trou de positionnement (51) est un trou borgne.

8. Dispositif de moussage pour le lait selon la revendication 5, dans lequel :
l'élément magnétique d'entraînement (64) a une forme rectangulaire et est monté verticalement à l'intérieur de la rainure rectangulaire de la crémaillère de montage d'éléments magnétiques (50) ;
l'élément magnétique asservi (54) a également une forme rectangulaire et est monté verticalement à l'intérieur de la rainure rectangulaire du dispositif rotatif.

9. Dispositif de moussage pour le lait selon la revendication 5, dans lequel :
l'élément magnétique d'entraînement (64) a une forme annulaire et est monté à l'intérieur de la rainure annulaire de la crémaillère de montage d'éléments magnétiques (50) ;
l'élément magnétique asservi (54) a également une forme sectorielle et est monté à l'intérieur de la rainure sectorielle du dispositif rotatif (6).

10. Dispositif de moussage pour le lait selon la revendication 5, dans lequel :
le récipient (1) est pourvu d'une poignée (8) qui présente un commutateur (7) ;
le commutateur (7) commande le fonctionnement du dispositif de chauffage (2) et du moteur (4) et a également une lampe témoin (72) ;
le récipient (1) est pourvu d'une goulotte (13) ;
le dispositif de chauffage (2) est également pourvu d'un thermostat (21) dans sa partie inférieure pour surveiller la température du dispositif de chauffage (2).
